(19)

**Europäisches Patentamt**

**European Patent Office**

**Office européen des brevets**

(11) **EP 4 764 612 A1**

(12) **EUROPEAN PATENT APPLICATION**

(43) Date of publication:
24.06.2026 Bulletin 2026/26

(21) Application number: 25206680.8

(22) Date of filing: 03.10.2025

(51) International Patent Classification (IPC):
*G01S 19/24* (2010.01)      *G01S 19/29* (2010.01)
*G01S 19/30* (2010.01)      *H04B 1/06* (2006.01)
*H04B 1/69* (2011.01)

(52) Cooperative Patent Classification (CPC):
**G01S 19/246; G01S 19/29; G01S 19/30;** H04B 1/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **19.12.2024  US 202418988458**

(71) Applicant: **NOVATEL INC.**
**Calgary T3K 2L5 (CA)**

(72) Inventors:
• **HUANG, Fang**
**T3K 2L5 Calgary, AB (CA)**
• **ANKLOVITCH, Darrell James**
**T3K 2L5 Calgary, AB (CA)**
• **ADJRAD, Mounir**
**T3K 2L5 Calgary, AB (CA)**

(74) Representative: **Kaminski Harmann**
**Patentanwälte AG**
**Landstrasse 124**
**9490 Vaduz (LI)**

(54) **SYSTEMS, METHODS, AND MEDIA FOR GENERATING PRE-CORRELATION PHASE COHERENT SAMPLES THAT CAN BE USED WITH COHERENT INTEGRATION FOR SIGNAL DETECTION**

(57)      Techniques are provided for generating pre-correlation phase coherent samples that can be used with coherent integration. Samples received over a buffer duration are equally divided into sub-buffers. A pre-correlation accumulation (PCA) output is generated, for each of a plurality of different test Doppler remainders of an unknown Doppler shift, using different multiples of the Doppler remainder being tested. A differential operation, to mitigate the Doppler shift, is executed on the PCA output for a test Doppler remainder, and the PCA output is mixed with a delayed version of itself to generate a PCA differential result. Signal despreading is executed by mixing the PCA differential result with a code matching differential result to generate a despreading result. Coherent integration is executed by accumulating the despreading result to generate a correlation output. If the correlation output meets a predefined threshold, signal detection is confirmed.

**Description**

*Technical Field*

The invention relates generally to signal processing, and in particular, to systems, methods, and media for generating pre-correlation phase coherent samples that can be used with coherent integration for signal detection.

*Background Information*

Global Navigation Satellite System (GNSS) signal acquisition and tracking are crucial components of GNSS signal processing such that a receiver can obtain/extract the necessary information to perform one or more navigation functions. Coherent and non-coherent integration, both of which accumulate the signal energy over a defined integration time, are two different techniques that are commonly used for GNSS signal acquisition and tracking.

Coherent integration is typically more effective in stable and open environments, such as open sky, where there is minimal multipath interference. In complex environments, where conditions can rapidly change or where the signal can be distorted, maintaining phase coherence can be challenging, which in turn reduces the effectiveness of coherent integration. In these complex environments, non-coherent integration can be a better option, but is also less sensitive when compared to coherent integration.

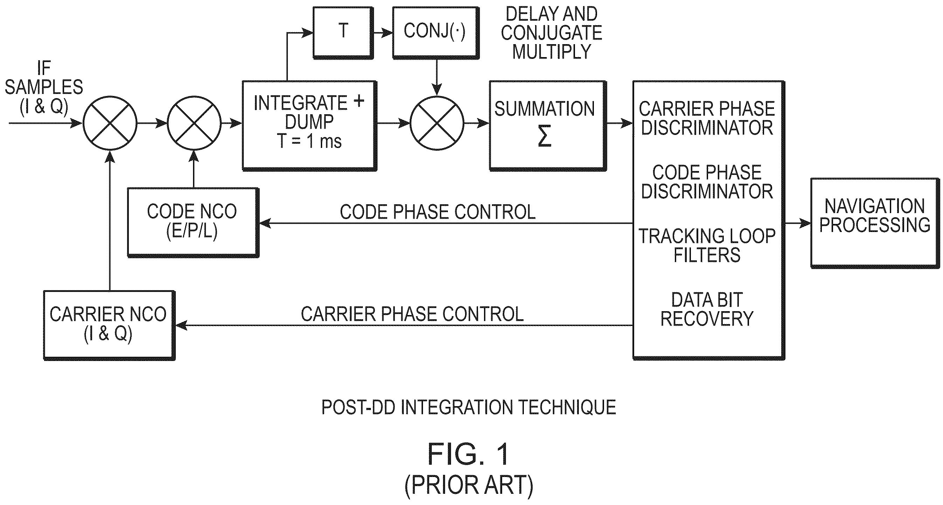

Fig. 1 is a block diagram of a system (prior art) that implements a conventional post-detection differential (Post-DD) coherent integration technique. The post-DD coherent integration of Fig. 1 is a modification of the standard non-coherent integration. Instead of using a squaring operation that is required by the standard non-coherent integration method, the differential operation of the correlation results of the samples of the navigation signal (e.g., weak navigation signal) are used according to the Post-DD coherent integration of Fig. 1. After the differential operation, the phase is consistent and can be accumulated for a longer period of time. With the Post-DD coherent integration technique implemented by the system of Fig. 1, the system uses a carrier phase tracking loop that generates a local carrier signal at different adjusted frequencies and correlates the local signal with the incoming weak signal. The system can compare the different correlation peaks to identify the adjusted frequency of the local signal that produces the best correlation (e.g., highest correlation peak) with the incoming weak signal. The adjusted frequency that is identified as having the best correlation with the incoming weak signal can be utilized to mitigate the Doppler effect (i.e., Doppler shift) on the incoming signal.

The Post-DD coherent accumulation amplifies the signal strength of the weak signal by effectively combining the correlation results regardless of the phase difference for every small correlation section (e.g., 1 ms). As a result, this process improves the signal-to-noise ratio (SNR) of the incoming weak signal. The Doppler effect is mitigated through the differential operation, so that the samples of the weak signal can be accumulated. The Post-DD coherent integration method can only mitigate Dopplers within +/- $1/(2*T)$ Hz of the Doppler set by the carrier NCO of Fig. 1. Therefore, a larger number of Doppler trials are necessary to cover the large frequency range of, for example, +/- 120 KHz.

Although the Post-DD coherent integration of Fig. 1 can be better suited for complex environments where phase coherence is difficult to maintain, the Post-DD coherent integration method still requires the phase coherence within the small correlation sections. Further, using a carrier phase tracking loop of Fig. 1 (e.g., carrier NCO) to iteratively search for the correct Doppler shift in the large frequency range (e.g., +/- 120 KHz) is inefficient and can delay the accumulation of the samples, which in turn can delay signal detection that is a part of signal acquisition. Moreover, the Post-DD coherent integration of Fig. 1 has limited Doppler effectiveness because so many Doppler trials must be executed.

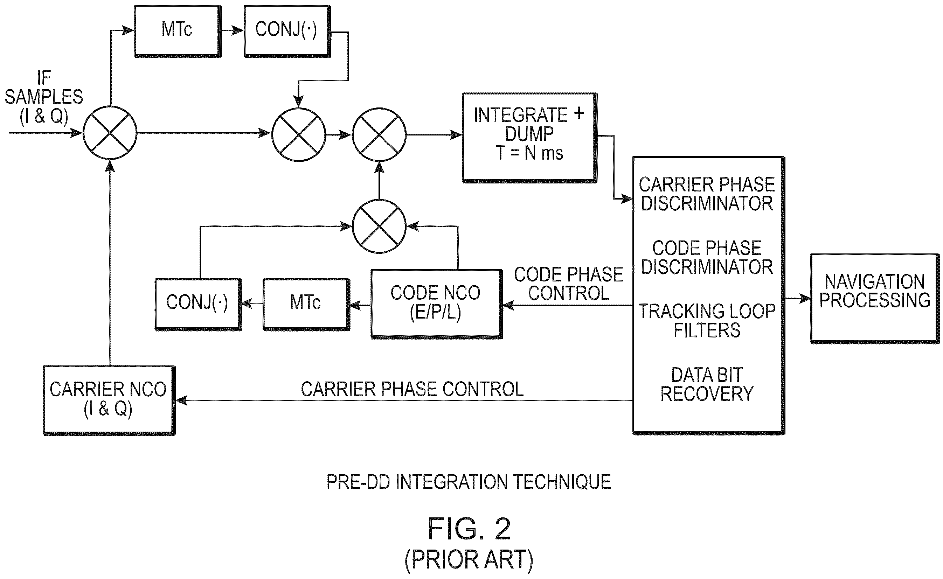

Fig. 2 is a block diagram of a system (prior art) that implements a Pre-DD coherent integration technique. With coherent integration, multiple complex samples of the weak signal are accumulated over the defined integration time while preserving the phase information for each sample. The coherent accumulation amplifies the strength of the weak signal by effectively combining the energy of the individual samples while maintaining their phase relationships. As a result, this process improves the SNR of the incoming weak signal. However, the Pre-DD coherent integration technique is not well suited for complex environments.

Additionally, the system of Fig. 2 mitigates the Doppler effect as part of the phase coherence and before the integration. Specifically, the system of Fig. 2 mitigates the Doppler effect, which is part of the phase coherence, by utilizing a delay and multiplication operation (e.g., conjugate multiplication operation) on the incoming samples before correlation between the incoming signal and the reference signal (time domain only, or a faster Fast Fourier Transform (FFT) frequency domain technique), wherein the correlation is followed by an accumulation process (e.g., integrate + dump of Fig. 2). The mitigation of the Doppler effect of Fig. 2 is more efficient than the Post-DD coherent integration technique of Fig. 1 since a single differential operation (e.g., conjugate multiplication operation) can be used instead of a frequency search. It should be noted that the differential operation being before correlation and the following accumulation is crucial for the Pre-DD coherent integration technique of Fig. 2 because the Doppler effect can be removed to maintain phase coherence for the accumulation of a longer length of the samples.

Although the Doppler effect can be mitigated more efficiently using the multiplication operation, the multiplication operation typically introduces massive signal loss or signal degradation (signal power is extremely low before correlation) due to amplitude reduction, dynamic range issues, etc. As a result, the samples from the lost or degraded signal cannot have a comparable signal strength after they are accumulated in the subsequent, i.e., downstream, integrate and dump operation of Fig. 2. An inefficient and less than ideal solution is to increase the defined integration time (e.g., T=N ms) so that additional samples can be accumulated during integration to compensate for the degraded SNR due to the multiplication operation. Thus, the multiplication operation in the system of Fig. 2 that is used to mitigate the Doppler effect can delay the accumulation of the samples, which in turn delays signal detection that is a part of signal acquisition.

What is needed is an efficient integration technique for signal detection that eliminates the Doppler effect without requiring a massive Doppler testing process, while also preventing the far longer data accumulation process, which is used for signal amplification, from being negatively impacted by signal loss or degradation caused by a differential operation (e.g., multiplication operation of Fig. 2).

## SUMMARY

Techniques are provided for generating pre-correlation phase coherent samples that can be used with coherent integration for signal detection. As a result, and as will be described in further detail below, signal loss or degradation caused by a differential operation will not prevent implementation of the signal detection.

Specifically, a processor (e.g., a pre-correlation stacking unit executed by the processor) may receive a plurality of samples, e.g., complex samples, over a buffer duration. The pre-correlation stacking unit may equally divide the samples received over the buffer duration into sub-buffers. The pre-correlation stacking unit can generate a stacked samples output for each of a plurality of different test Doppler remainders of an unknown Doppler shift. For example, and for a test Doppler remainder of the plurality of different test Doppler remainders, the pre-correlation stacking unit may phase rotate the samples of each sub-buffer over the buffer duration by a different multiple of the value of the test Doppler remainder.

Based on the phase rotations, the pre-correlation stacking unit can generate a stacked samples output for the test Doppler remainder. The pre-correlation stacking unit can generate a pre-correlation accumulation (PCA) output for a test Doppler remainder by accumulating the stacked samples output for the test Doppler remainder. Therefore, the pre-correlation stacking unit can generate a PCA output for each of the plurality of different test Doppler remainders for the unknown Doppler shift.

The processor may sequentially execute a differential operation on each of the PCA outputs. In an embodiment, the differential operation includes a delay operation and a conjugate multiply operation that generates a delayed version of the PCA output. The processor (e.g., a mixer executed by the processor) may mix the PCA output with a delayed version of itself to generate a PCA differential result. The differential operation with the mixing may result in the mitigation of the Doppler shift.

Additionally, a local code (e.g., generated by a code Numerically Controlled Oscillator (NCO)) may use the same type of differential operation and a different mixer to generate at least one code matching differential result.

The processor (e.g., a mixer executed by the processor) may receive the PCA differential result and the at least one code matching differential result. The mixer may mix the PCA differential result with the at least one code matching differential result to generate despreading result(s).

In an embodiment, the processor (e.g., an integration unit executed by the processor) may sequentially receive the despreading result(s) for each different test Doppler remainder. The integration unit may execute coherent integration by accumulating the despreading result(s) to generate one or more correlation peaks (i.e., correlation output) for each of the plurality of different test Doppler remainders.

If a correlation peak meets a predefined threshold (e.g., noise threshold), the processor may determine that a legitimate signal, which is distinguishable from noise, is detected. If the signal is detected, the correlation peak may be optionally utilized for signal acquisition and tracking. If the correlation peak does not meet the predefined threshold, the correlation peak may be ignored, for example.

In an embodiment, the PCA output for each test Doppler remainder over the buffer duration may be utilized, if necessary, with the coherent integration to determine if the corresponding correlation peak(s) result in a detected signal that can be optionally used for signal acquisition and tracking. In an embodiment, only one of the PCA outputs for a test Doppler remainder over the buffer duration will result in one or more correlation peaks that meet the predefined threshold, while the other PCA outputs for the other test Doppler remainders over the buffer duration will not result in correlation peaks that meet the predefined threshold.

The process may then repeat for a next buffer duration where new PCA outputs are generated for test Doppler remainders for the unknown Doppler shift over the next buffer duration.

**BRIEF DESCRIPTION OF THE DRAWINGS**

The description below refers to the accompanying drawings, of which:

Fig. 1 is a block diagram of a system (prior art) that implements a conventional post-detection differential (Post-DD) coherent integration technique;

Fig. 2 is a block diagram of a system (prior art) that implements a Pre-DD coherent integration technique;

Fig. 3 is an illustration of an example system environment for obtaining pre-correlation phase coherence for signal detection according to the one or more embodiments as described herein;

Fig. 4 is an example block diagram of enhanced Pre-DD signal processing unit according to the one or more embodiments as described herein;

Fig. 5 is an example block diagram of pre-correlation stacking unit that may phase rotate samples received over a buffer duration to test a plurality of different Doppler remainders according to the one or more embodiments as described herein;

Fig. 6 is a flow diagram of a sequence of steps for generating pre-correlation accumulation (PCA) outputs according to the one or more embodiments as described herein;

Fig. 7 is a flow diagram of a sequence of steps for using pre-correlation PCA outputs for signal detection according to the one or more embodiments as described herein; and

Fig. 8 is a flow diagram of a sequence of steps for estimating an unknown Doppler shift using a correlation peak determined from the signal detection of Fig. 7 and according to the one or more embodiments as described herein.

**DETAILED DESCRIPTION OF AN ILLUSTRATIVE EMBODIMENT**

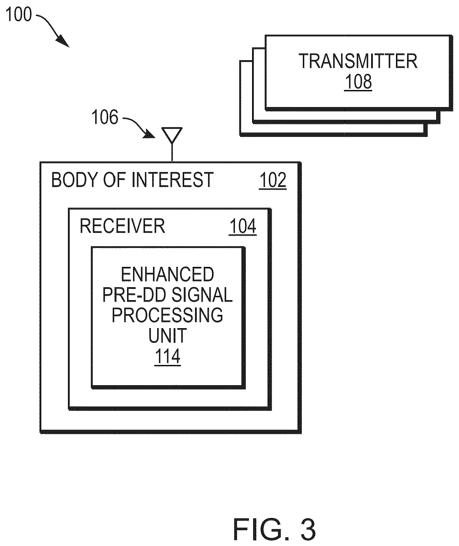

Fig. 3 is an illustration of an example system environment 100 for obtaining pre-correlation phase coherence for signal detection according to the one or more embodiments as described herein. System environment 100 includes a body of interest 102, e.g., a moving vehicle, a stationary object, etc. Coupled to the body of interest 102 may be a receiver 104 and an antenna 106. Antenna 106, coupled to the body of interest 102 and in communication with receiver 104, may receive one or more signals from one or more transmitters 108. In an embodiment, the signals may have a Doppler shift within +/- 120 KHz of the transmitted frequency at which the transmitter 108 transmits the signals.

In an embodiment, the one or more transmitters 108 may be one or more Global Navigation Satellite System (GNSS) satellites that transmit one or more navigation signals, e.g., GNSS satellite signals (not shown). When the one or more transmitters 108 are GNSS satellites, the GNSS satellites may be Low Earth Orbit (LEO) satellites that have higher Doppler rates when compared to non-LEO satellites. Although reference may be made to transmitters 108 being GNSS satellites transmitting GNSS satellite signals, it is expressly contemplated that the one or more embodiments as described herein may be utilized with any of a variety of different types of transmitters 108. For example, transmitters 108 may be terrestrial transmitters that transmit any of a variety of different signals or navigation signals. As such, the description of transmitters 108 being GNSS satellites that transmit GNSS signals should be taken for illustrative purposes only.

Receiver 104 may, based on the reception of signals at antenna 106, produce raw measurements (e.g., GNSS raw measurements), such as pseudoranges, carrier phases, and Doppler velocities; position (e.g., GNSS position), velocity (e.g., GNSS velocity) and time (e.g., GNSS time), position covariance, and velocity covariance; and, as appropriate, GNSS observables.

As depicted in Fig. 3, receiver 104 includes enhanced pre-detection differential (pre-DD) signal processing unit 114. For simplicity, the enhanced pre-DD signal processing unit 114 as discussed and described herein may be referred to as the signal processing unit 114. The signal processing unit 114 may implement the one or more embodiments as described herein.

Specifically, the signal processing unit 114 can generate, before correlation (e.g., by mixer 211C with the local code), an accumulation result that coherently increases the signal power relative to the channel noise for coherent integration. The signal processing unit 114 can execute a differential operation (e.g., delay operation and conjugate multiply operation) on the accumulation result as part of a process to mitigate the effects of the Doppler shift.

Because the differential operation is executed on the accumulated result with increased power, signal loss or degradation from the differential operation is less impactful when compared to conventional systems and techniques.

Specifically, and with conventional systems like those depicted in Fig. 2 (prior art), the signal power can be extremely low before correlation. The differential operation that is performed before correlation (e.g., integrate + dump in Fig. 2) can introduce signal loss or signal degradation on the already low-power signal. This can disrupt and negatively affect the ability of such conventional systems, as depicted in Fig. 2, from efficiently or effectively performing signal detection.

As will be described in further detail below, the one or more embodiments as described herein overcome this technical problem by first generating a pre-correlation accumulation (PCA) output from stacked samples and then performing the differential operation. Because the accumulation is performed first, the increased power of the PCA output can compensate for the power loss that might be caused by the subsequent differential operation. Therefore, and according to the one or more embodiments as described herein, the negative power loss caused by a differential operation is less impactful on signal detection when compared to conventional systems as those depicted in Fig.2.

Moreover, the one or more embodiments as described herein can utilize the differential operation as part of a process to mitigate the Doppler effect instead of iteratively searching for the correct Doppler shift in a large frequency range, which is a problem encountered by other conventional systems as depicted in Fig. 1 (prior art).

Advantageously, the one or more embodiments as described herein can detect the signal more efficiently and effectively when compared to these conventional systems. Accordingly, the one or more embodiments as described herein provide an improvement in the existing technological field of signal processing. That is, the one or more embodiments as described herein provide an improvement in the existing technological field of signal detection.

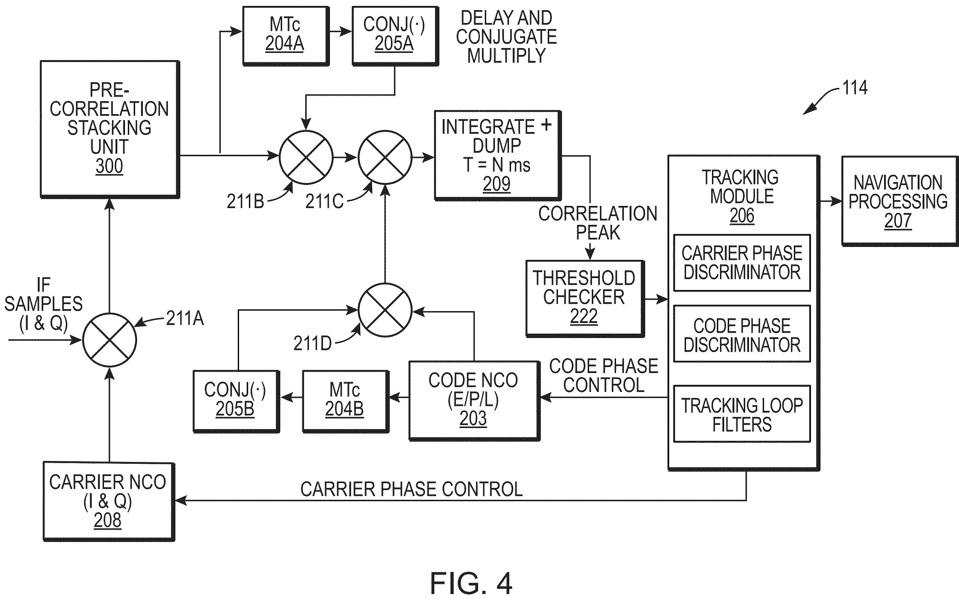

Fig. 4 is an example block diagram of enhanced pre-DD signal processing unit 114 according to the one or more embodiments as described herein. Each of the components in Fig. 4 may be software, hardware, or a combination of software and hardware. Although the description in relation to Fig. 4 may refer to navigation signals, it is expressly contemplated that the one or more embodiments as described herein are applicable for detecting any of a variety of different types of signals. For example, the enhanced pre-DD signal processing unit 114 of Fig. 4 may be utilized as described herein to detect any types of signals that require phase coherence for detection. For example, such signals may include, but are not limited to, radio signals, optical signals, microwave signals, acoustic signals, light signals, etc. As such, the reference to navigation signals herein is for illustrative purposes only.

The signals that are received at antenna 106 in Fig. 3 may be downconverted to intermediate frequency (IF) samples, resulting in IF samples with an in-phase (I) component and a quadrature (Q) component. This is depicted in Fig. 4 as "IF samples (I & Q)". The IF samples may be provided to complex mixer 211A. Although Fig. 4 illustrates the signal being downconverted to IF samples, it is expressly contemplated that the one or more embodiments as described herein can be implemented without the downconversion. For example, the IF can be "wiped-off" in a conventional manner.

Additionally, carrier Numerically Controlled Oscillator (NCO) 208 may generate and provide, in a conventional manner, a local carrier signal to complex mixer 211A. Complex mixer 211A may mix the IF samples with the local carrier signal, in a conventional manner, to generate baseband I & Q samples ("carrier wipe off"). For simplicity, baseband I & Q samples that are complex values may be referred to as sample or samples as used herein.

The samples are affected by the Doppler shift, which may be unknown. Therefore, the samples cannot simply be used for coherent integration, implemented by integrate + dump 209 of Fig. 4, since the samples will not be sufficiently in-phase with the local code signal.

The Doppler shift is proportional to the relative velocity between the transmitter 108 (e.g., GNSS satellite) and antenna 106. A larger Doppler shift generally indicates a higher relative velocity between the transmitter 108 and antenna 106. As indicated above, navigation signals (e.g., signals from LEO satellites) may have a Doppler shift within +/- 120 KHz of the transmitted frequency at which the transmitter 108 transmits the signals. Because of this Doppler frequency range, it can be assumed that the unknown Doppler shift is likely to remain relatively constant over a reasonable maximum duration (e.g., buffer duration). In an embodiment, a maximum reasonable duration may be 21 ms. However, it is expressly contemplated that the buffer duration may be any value that, for example, may be preconfigured or predetermined.

Moreover, phase shift is related to frequency based on the following:

$$\text{Phase Shift (in cycles)} = \text{Time (in seconds)} \times \text{Frequency (in hertz)}$$

If the unknown Doppler frequency remains relatively constant for the time duration (buffer duration), the phase shift will change as a function of time. For example, let it be assumed that the unknown Doppler shift, which is constant over a duration of 5 ms, is one of 50 KHz, 113 KHz, 33.25 KHz, or 22.25 KHz. Based on the above formula, the phase shifts at each of the 5 ms is as follows:

| Time duration | Phase Shift for 50 KHz | Phase Shift for 113 KHz | Phase Shift for 33.25 KHz | Phase Shift for 22.25 KHz |
|---|---|---|---|---|
| 1 ms | 50 cycles | 113 cycles | 33.25 cycles | 22.25 cycles |
| 2 ms | 100 cycles | 226 cycles | 66.50 cycles | 44.50 cycles |
| 3 ms | 150 cycles | 339 cycles | 99.75 cycles | 66.75 cycles |
| 4 ms | 200 cycles | 452 cycles | 133 cycles | 89 cycles |
| 5 ms | 250 cycles | 565 cycles | 166.25 cycles | 111.25 cycles |

Although the sub-buffer duration in the table above is 1 ms, it is expressly contemplated that the sub-buffer duration may be a different time duration. For example, the sub-buffer duration may be 0.1 ms, 0.5 ms, 2 ms, etc.

As illustrated in the table above, when the unknown Doppler shift is an integer multiple of 1 KHz (e.g., 50 KHz or 113 KHz in the above table), the fractional part of the phase shift at each ms will be 0, e.g., a multiple of 0. That is, the fractional part of the phase shift at each ms for any unknown Doppler shift that is an integer multiple of 1 KHz will be 0 (e.g., approximately 0). As further illustrated in the table above, when the unknown Doppler shift is a fractional multiple of 1 KHz, the fractional part of the phase shift at each ms will be a different multiple of the value of the Doppler remainder of the Doppler shift. For example, the value of the Doppler remainder of 33.25 KHz is 0.25. As shown in the third column of the table above, the fractional part of the phase shift at each ms is a different multiple of 0.25. Specifically, the fractional part of the phase shift at 1 ms is 0.25 cycles which is a first multiple of 0.25. The fractional part of the phase shift at 2 ms is 0.50 cycles which is a second multiple of 0.25. The fractional part of the phase shift at 3 ms is 0.75 cycles which is a third multiple of 0.25, and so forth.

Further, and importantly, two signals are considered "in-phase" when their positions within a cycle align, which means that their fractional parts are the same. For example, in 4.25 cycles, the integer part indicates 4 complete cycles and the fractional part indicates that the signal is at the quarter position (e.g., 90 degrees) into the 5th cycle. In 12.25 cycles, the integer part indicates 12 completes cycles and the fractional part indicates that the signal is at the quarter position into the 13th cycle. Therefore, even though the signals have different total rotations (4.25 cycles and 12.25 cycles), they are still in-phase because their fractional parts are the same.

Therefore, the fractional parts of phase rotations dictate whether signals are in-phase or out-of-phase. Moreover, and as explained above, the fractional parts of the phase rotations, for an unknown Doppler shift over a buffer duration, are different multiples of the value of the Doppler remainder of the unknown Doppler shift because (1) of the relationship between phase shift and frequency and (2) the unknown Doppler shift is relatively constant over the buffer duration.

The one or more embodiments as described herein utilize these factors and test different Doppler remainders to generate pre-correlation phase coherent samples (e.g., a PCA differential result) that can be used for coherent integration as will be described in further detail below. Specifically, the samples from complex mixer 211A are provided to pre-correlation stacking unit 300 that tests different Doppler remainders to generate pre-correlation samples with increased signal power and that can be utilized with the differential operation to obtain a PCA differential result that is phase coherent with the local code signal. As a result, coherent integration can be implemented by integrate + dump 209 as will be described in further detail below.

Specifically, and as will be described in further detail below, the pre-correlation stacking unit 300 may receive a plurality of samples over a buffer duration. The pre-correlation stacking unit 300 may use different phase rotations on the samples to test a plurality of different Doppler remainders for an unknown Doppler shift that is impacting the samples over the buffer duration.

For example, the pre-correlation stacking unit 300 may equally divide the received samples into sub-buffers (i.e., portions) and phase rotate each sub-buffer using a different multiple of a value of the test Doppler remainder. In an embodiment, the number of phase rotations for a test Doppler remainder is equal to 4*floor(N/2), wherein N is the buffer duration in terms of the number of the code (sub-buffers) to be stacked (e.g., milliseconds).

It should be expressly understood that when referring to a sub-buffer, the one or more embodiments as described herein may be referring to the samples that make up the sub-buffer. As such, the reference to sub-buffers is simply used to differentiate a set of samples from other samples that may, for example, be received over a same buffer duration.

After the phase rotations, the pre-correlation stacking unit 300 can generate a stack of samples from the sub-buffers and over the buffer duration for the test Doppler remainder. The pre-correlation stacking unit 300 may similarly generate a stack of samples from the sub-buffers and over the buffer duration for each of the other Doppler remainders being tested. The stack of samples may be accumulated by the pre-correlation stacking unit 300 to generate a pre-correlation accumulation (PCA) output for each test Doppler remainder. The output of the pre-correlation stacking unit 300 may be the PCA output for each of the different Doppler remainders being tested.

As will be described in further detail below, one (e.g., only one) PCA differential result, corresponding to a particular PCA output, will result in sufficient phase coherence with the local code signal that is used for coherent integration implemented by integrate + dump 209. As a result, and as will be described in further detail below, the correlation output (e.g., one or more correlation peaks) can be used for signal detection.

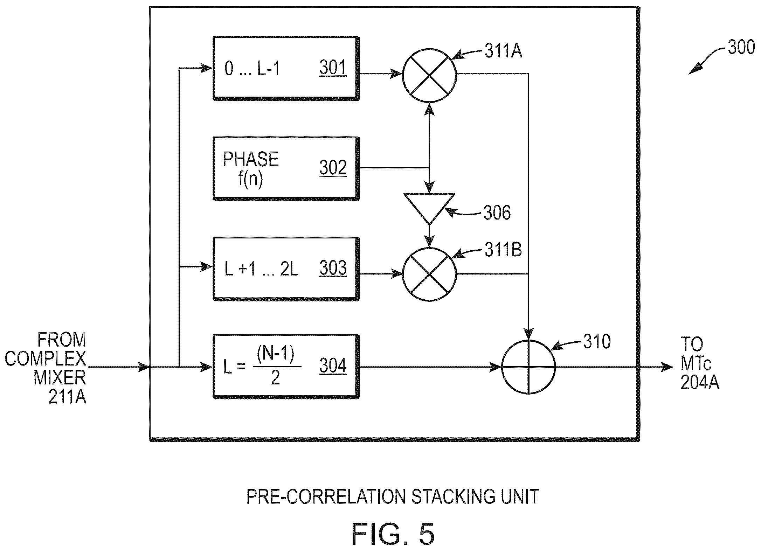

Fig. 5 is an example block diagram of pre-correlation stacking unit 300 that may phase rotate samples received over a buffer duration to test a plurality of different Doppler remainders according to the one or more embodiments as described herein. For the example of Fig. 5, let it be assumed that the buffer duration is 5 ms and 10,240 samples are received by pre-correlation stacking unit 300 over the 5 ms buffer duration. N in box 304 of Fig. 5 represents the buffer duration in terms of the number of the code (sub-buffers) to be stacked. Therefore, in this example, N is 5. For this example, the pre-correlation stacking unit 300 may divide the 10,240 samples into five 1 ms sub-buffers, where each 1 ms sub-buffer includes 2,048 samples.

Because N is 5, L of box 304 is 2 (e.g., (5 - 1)/2). In an embodiment, L may represent the offset between the sub-buffers and the reference sub-buffer that, for example, is not phase-rotated. In Fig. 5, each of the values in boxes 301, 303, and 304 represents a different sub-buffer. Therefore, and in this example, each of the values in boxes 301, 303, and 304 represents a different sub-buffer of the five different sub-buffers. Box 301 includes sub-buffers 0 and 1 (L-1). Specifically, sub-buffer 0 includes the 2,048 samples received over the first 1 ms and sub-buffer 1 includes the 2,048 samples received over the second 1 ms.

Box 304 includes sub-buffer 2 (e.g., L= 2). Specifically, sub-buffer 2 includes the 2,048 samples received over the third 1 ms. Box 303 includes sub-buffers 3 and 4 (e.g., 2+1 ... 2(2)). Specifically, sub-buffer 3 of box 303 includes the 2,048 samples received over the fourth 1 ms and sub-buffer 4 includes the 2,048 samples received over the fifth 1 ms.

For any unknown Doppler that is approximately an integer multiple of 1 KHz (e.g., no Doppler remainder) over 1 ms (a typical example of the GNSS code length), the phase shift between each of sub-buffers 0 through 4, each representing a different 1 ms over the buffer duration, will be zero, i.e., approximately zero. However, the unknown Doppler may not be a multiple of 1 KHz, and instead may be a fractional multiple of 1 KHz over the 1 ms. When the unknown Doppler is a fractional multiple of 1 KHz, and thus has an unknown Doppler remainder, the phase shift between each of sub-buffers 0 through 4, each representing a different 1 ms over the buffer duration, will be a different multiple of the approximate value of the unknown Doppler remainder.

Referring to Fig. 5, box 302 includes f(n) that represents different phase rotation values that can be used to test a Doppler remainder.

For this example, the test Doppler remainders are 0 KHz, 0.125 KHz, 0.25 KHz, 0.375 KHz, 0.5 KHz, 0.625 KHz, 0.75 KHz and 0.875 KHz.

Continuing with the example, let it be assumed that phase f(n) of box 302 represents the different phase rotations, in cycles, that can be used to test a Doppler remainder of 0 KHz. The test Doppler remainder of 0 KHz assumes that the unknown Doppler shift is an integer multiple of 1 KHz, thus having no remainder or a remainder value that is approximately 0. Therefore, the samples of sub-buffers 0 through 4 are not phase rotated since every multiple of the value of 0 KHz is still equal to 0.

Following the logic flow for the components of Fig. 5, mixer 311A rotates the phase of the samples of sub-buffers 0 and 1 by 0 cycles that results in no phase rotation to the samples. Further, the phase rotation value of 0 cycles being inverted by inverter 306 results in an output of 0 cycles. Therefore, mixer 311B rotates the phase of samples of sub-buffers 3 and 4 by 0 cycles that results in no phase rotation to the samples. Moreover, the samples of sub-buffer 2 are not phase rotated such that sub-buffer 2 acts as a reference sub-buffer.

Continuing with the example, let it be assumed that the test Doppler remainder of 0.25 KHz is tested next. A test Doppler remainder of 0.25 KHz assumes that the unknown Doppler shift is a fractional multiple of 1 KHz and the unknown Doppler shift has a Doppler remainder of 0.25 KHz (approximately 0.25 KHz). Therefore, the samples of each of buffers 1 through 4 are phase rotated, in cycles, based on a different multiple of 0.25, which is the value of 0.25 KHz.

For this example, phase f(n) of box 302 may represent different phase rotations, in cycles, that can be used to test a Doppler remainder of 0.25 KHz. As will be described in further detail below, phase f(n) of box 302 may represent phase rotation values of 0.25 cycles and 0.5 cycles, and these values can be inverted by inverter 306 to obtain phase rotation values of -0.25 cycles and -0.5 cycles. As will be described in further detail below, phase rotation values of 0.25 cycles, 0.5 cycles, -0.25 cycles, and -0.5 cycles may be used to test the Doppler remainder of 0.25 KHz.

Specifically, one multiple of 0.25 is 0.25 (e.g., 1 x 0.25). As such, mixer 311A may rotate the phase of the samples of sub-buffers 1 by 0.25 cycles. The phase rotation value of 0.25 cycles is inverted by inverter 306. The output of inverter 306 is -0.25 cycles, which is a different multiple of 0.25 (e.g., -1 x 0.25). As such, mixer 311B may rotate the phase of the samples of sub-buffer 3 by -0.25 cycles.

A further different multiple of 0.25 is 0.5 (e.g., 2 x 0.25). As such, mixer 311A may rotate the phase of the samples of sub-buffer 0 by 0.5 cycles. The phase rotation value of 0.5 cycles is inverted by inverter 306. The output of inverter 306 is -0.5 cycles, which is an even further different multiple of 0.25 (e.g., -2 x 0.25). As such, mixer 311B may rotate the phase of the samples of sub-buffer 4 by -0.5 cycles. The samples of sub-buffer 2 are not rotated in phase such that sub-buffer 2 acts as a reference sub-buffer. Stated another way, the samples of sub-buffer 2 are phase rotated by 0 cycles, which is another multiple of 0.25 (0 x 0.25). Therefore, the samples of each of sub-buffers 0 through 4 are phase rotated based on a different multiple of 0.25, which is the value of the test Doppler remainder (0.25 KHz).

According to the one or more embodiments as described herein, the phase rotation between any two consecutive sub-buffers is determined by the value of the test Doppler remainder (e.g., 0.25). That is, the sub-buffers are organized, i.e., stacked in sequential order, such that the phase rotation between any two consecutive buffers is equal to the multiplication of the code length and the value of the test Doppler remainder.

The table below illustrates the phase rotations applied to each of sub-buffers 0 through 4 for the test Doppler remainder of 0.25 KHz:

| Sub-buffer 4 (2,048 samples for 5th ms) | Sub-buffer 3 (2,048 samples for 4th ms) | Sub-buffer 2 (2,048 samples for 3rd ms) | Sub-buffer 1 (2,048 samples for 2nd ms) | Sub-buffer 0 (2,048 samples for 1st ms) |
|---|---|---|---|---|
| -0.50 cycles (-2 multiple of 0.25) | -0.25 cycles (-1 multiple of 0.25) | 0.0 cycles (0 multiple of 0.25) | 0.25 cycles (1 multiple of 0.25) | 0.5 cycles (2 multiple of 0.25). |

As illustrated above, the samples of each sub-buffer are phase rotated by a different multiple of 0.25. Further, and as illustrated above, sub-buffers 2 and 1 are two consecutive sub-buffers. The phase rotation between sub-buffers 2 and 1 is 0.25 cycles, which is the value of the test Doppler remainder (0.25 KHz). Sub-buffers 4 and 3 are two other consecutive sub-buffers. The phase rotation between sub-buffers 4 and 3 is 0.25 cycles, which is the value of the test Doppler remainder (0.25 KHz).

Therefore, and according to the one or more embodiments as described herein, sub-buffers 0 through 4 may be sequenced/stacked, as illustrated in the table above, such that the phase rotation between any two consecutive buffers is 0.25 cycles, which is the value of the test Doppler remainder. Accordingly, the stacked samples of sub-buffers 0 through 4, which are each phase rotated by a different multiple of 0.25, account for the assumption that the unknown Doppler shift is a fractional multiple of 1 KHz over 1 ms and has a Doppler remainder of approximately 0.25 KHz.

Continuing with the example, the pre-correlation stacking unit 300 may operate in a similar manner, as described above, to stack samples of sub-buffers 0 through 4 for the test Doppler remainder of 0.5 KHz. Therefore, the samples of sub-buffers 0 through 4 are each phase rotated by a different multiple of 0.5 to account for the assumption that the unknown Doppler shift is a fractional multiple of 1 KHz over 1 ms and has a Doppler remainder of approximately 0.5 KHz. Further, sub-buffers 0 through 4 may be sequenced/stacked such that the phase rotation between any two consecutive sub-buffers is 0.5 cycles. Accordingly, the stacked samples of sub-buffers 0 through 4 account for the assumption that the unknown Doppler shift is a fractional multiple of 1 KHz over 1 ms and has a Doppler remainder of approximately 0.5 KHz.

Continuing with the example, the pre-correlation stacking unit 300 may operate in a similar manner, as described above, to stack samples of sub-buffers 0 through 4 for the test Doppler remainder of 0.75 KHz. Therefore, the samples of sub-buffers 0 through 4 are each phase rotated by a different multiple of 0.75 to account for the assumption that the unknown Doppler shift is a fractional multiple of 1 KHz over 1 ms and has a Doppler remainder of approximately 0.75 KHz. Further, sub-buffers 0 through 4 may be sequenced/stacked such that the phase rotation between any two consecutive sub-buffers is 0.75 cycles. Accordingly, the stacked samples of sub-buffers 0 through 4 account for the assumption that the unknown Doppler shift is a fractional multiple of 1 KHz over 1 ms and has a Doppler remainder of approximately 0.75 KHz.

The pre-correlation stacking unit 300 would operate in a similar manner to stack samples of sub-buffers 0 through 4 for each of the other test Doppler remainders of 0.125 KHz, 0.375 KHz, 0.625 KHz, and 0.875 KHz. Although the example above describes generating a stacked samples output for each of the test Doppler remainders sequentially, it is expressly contemplated that the stacked samples outputs for the test Doppler remainders may be generated in parallel.

The adder 310 of pre-correlation stacking unit 300 may accumulate/add stacked samples to generate a pre-correlation accumulation (PCA) output. For the example as described herein, the adder 310 accumulates the stacked samples of sub-buffers 0 through 4 for each of test Doppler remainders of 0 KHz, 0.125 KHz, 0.25 KHz, 0.375 KHz, 0.5 KHz, 0.625 KHz, 0.75 KHz, and 0.875 KHz. Therefore, and in this example, adder 310 of pre-correlation stacking unit 300 generates a PCA output for each of the 8 test Doppler remainders of 0 KHz, 0.125 KHz, 0.25 KHz, 0.375 KHz, 0.5 KHz, 0.625 KHz, 0.75 KHz, and 0.875 KHz.

Referring back to Fig. 4, the PCA output for each test Doppler remainder may sequentially be provided from pre-correlation stacking unit 300 to the differential operation that includes delay 204A and conjugate multiply 205A. The differential operation may generate a delayed version of the PCA output. Mixer 211B may mitigate the Doppler effect by mixing the PCA output with its delayed version to generate a PCA differential result. The PCA differential result may be provided to mixer 211C.

As illustrated in Fig. 4, mixer 211D mixes a local code (e.g., early version of the local PRN code, punctual version of the local PRN code, and/or late version of the local PRN code) generated by code NCO 203 with a delayed version of itself using the differential operation, which includes delay operation 204B and conjugate multiply operation 205B. The output of mixer 211D may be at least one code matching differential result and may include an early code matching differential result, a punctual code matching differential result, and/or a late code matching differential result. In an embodiment, delay operations 204A and 204B are the same and conjugate multiply operations 205A and 205B are the same.

As illustrated in Fig. 4, mixer 211C receives the PCA differential result from mixer 211B and the at least one code matching differential result from mixer 211D. Mixer 211C executes signal despreading by mixing (i.e., correlating) the PCA differential result with each code matching differential result. The execution of the signal despreading may result in the generation of a despreading result. As indicated above, the output from mixer 211D may include the early, punctual, and/or late code matching differential results. Accordingly, the mixer 211C may mix the PCA differential result with each code matching differential result to generate an early despreading result, a punctual despreading result, and/or a late despreading result.

The despreading result(s) from mixer 211C may be provided to the integrate + dump 209 of Fig. 4. The integrate + dump 209 may perform coherent integration by accumulating all the samples of a despreading result to generate a correlation peak (i.e., a correlation output). For example, each of the despreading results (e.g., early, punctual, and/or late) for a test Doppler remainder may be accumulated to generate an early correlation peak, a punctual correlation peak, and/or a late correlation peak. One of the correlation peaks may be a highest correlation peak indicating a point of maximum correlation between the PCA differential result and the code matching differential result.

Although not shown in Fig. 4, a Fast Fourier Transform (FFT) operation may be performed on each PCA differential result and the code matching differential result to convert the signals from the time domain to the frequency domain for a more efficient correlation process at mixer 211C. The mixer 211C may mix the PCA differential result and the code matching differential result in the frequency domain. After the mixing by mixer 211C, the despreading result may be converted back to the time domain using an Inverse FFT (IFFT) operation. In an embodiment, a half bins approach may be used for the FFT operation and the IFFT operation. With a half bins approach, half of the signal samples are used for the correlation.

The correlation peaks can be compared with a predefined threshold value (e.g., noise threshold). For example, a threshold checker 222 of Fig. 4 may compare the correlation peaks with the predefined threshold.

If a correlation peak meets the predefined threshold, it may indicate that the PCA differential result, corresponding to a particular PCA output, sufficiently aligned with the code matching differential result. Therefore, the phase coherence was the result of using the different phase rotation values, which are the different multiples of the value of the test Doppler remainder, that were used to generate the particular PCA output. Therefore, even though the Doppler shift is unknown, the one or more embodiments as described herein can achieve phase coherency for coherent integration using the different PCA outputs that are generated for the different test Doppler remainders.

If there is sufficient alignment such that a correlation peak meets the predefined threshold, the one or more embodiments as described herein can confirm the detection of a signal. That is, a legitimate signal is detected when a correlation peak meets the predefined threshold value that, for example, may represent a noise floor. A correlation peak may be optionally provided from threshold checker 222 to tracking module 206 that can utilize the correlation peak for signal acquisition and tracking. For example, the correlation peak can be utilized for signal acquisition and tracking by carrier phase discriminator, code phase discriminator, and tracking loop filters (e.g., code phase filter for delay-locked loop (DLL) and carrier phase filter for phase-locked loop (PLL)) of tracking module 206.

In an embodiment, the tracking module 206 may perform a variety of functions as part of signal acquisition/-tracking. One function that the tracking module 206 may perform is estimating the unknown Doppler shift according to the one or more embodiments as described herein. Specifically, and as explained above, the Doppler shift is unknown throughout the processing by the enhanced pre-DD signal processing unit 114 to achieve phase coherency for coherent integration. The tracking module 206 can estimate the unknown Doppler shift after achieving phase coherency (e.g., post-detection) according to the one or more embodiments as described herein. In an embodiment, the tracking module 206 can estimate the unknown Doppler shift based on the phase of a differential correlation peak (DCP), which may be represented as:

$$DCP = I + Q,$$

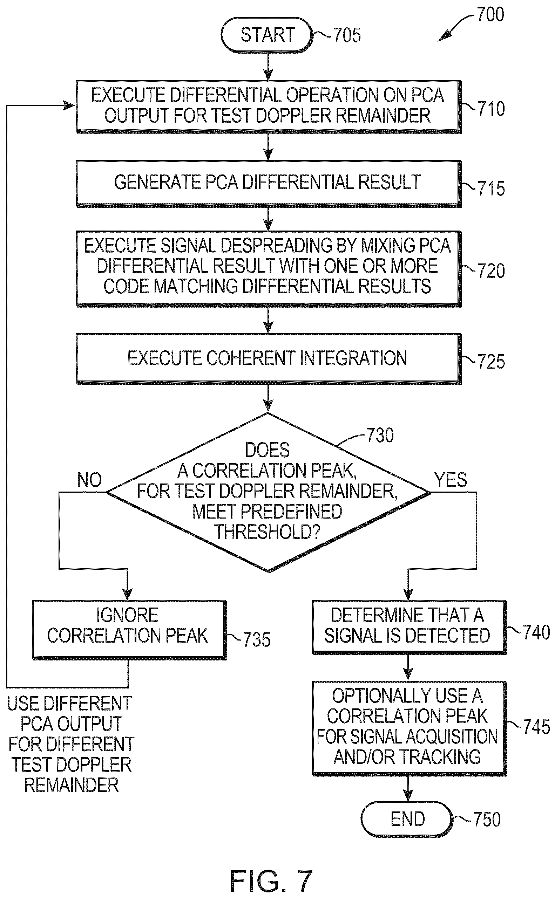

where I is the in-phase component of the correlation peak determined based on the coherent integration as described herein in relation to Fig. 7 and Q is the quadrature component of the correlation peak determined based on the coherent integration as described herein in relation to Fig. 7.

The phase (in cycles) of the DCP is computed based on the following:

$$\text{phase (in cycles)} = \tan^{-1}(Q,I),$$

wherein $\tan^{-1}$ is the inverse tangent operation.

According to the one or more embodiments as described herein, a phase offset in an I/Q sample is created when a signal difference (e.g., delay and conjugate multiply) is performed. For example, a phase offset in an I/Q sample is created after the execution of the delay 204A and conjugate multiply 205A of Fig. 4. The phase offset may be represented as:

$$\text{phase offset} = \text{Doppler shift} * \text{differential delay in samples/sample rate}.$$

Therefore, each I/Q sample that is the result of the delay 204A and conjugate multiply 205A of Fig. 4 will have this phase offset. However, the signal after the signal difference (e.g., delay 204A and conjugate multiply 205A) and before the coherent integration (e.g., integrate + dump 209) of Fig. 4 is still well below the noise floor such that the phase offset cannot be detected. Additionally, this phase offset is not affected by the mixing with the local code by mixer 211C of Fig. 4 because the phase of the code matching differential result from mixer 211D is 0. When the signal (e.g., despreading result from mixer 211C) is accumulated and amplified by integrate + dump 209 resulting in a correlation peak, the phase of the correlation peak is still directly related to the original unknown Doppler shift. Therefore, and according to the one or more embodiments as described herein, the tracking module 206 can estimate the unknown Doppler shift using the phase (in cycles) of the DCP and based on the following:

unknown Doppler shift (in Hz) = phase (in cycles)*sample rate (in Hz)/differential delay (in samples).

By estimating the unknown Doppler shift according to the one or more embodiments as described herein, signal acquisition and tracking is more efficient when compared to conventional approaches that may, for example, have to iteratively search for the correct Doppler shift in a large frequency range (e.g., +/- 120 KHz).

In addition to estimating the unknown Doppler shift as described herein, the tracking module 206 may perform additional functions. Such additional functions may include, but are not limited to, (1) determining an accurate frequency/code (E/P/L Discriminator), (2) determining a frequency/code drift Doppler rate model, and/or (3) determining a final code sweep error adjustment.

Returning to the example, let it be assumed that mixer 211C receives the PCA differential result for the test Doppler remainder of 0.25 KHz. Mixer 211C executes signal despreading by mixing the PCA differential result, for the test Doppler remainder of 0.25 KHz, with the code matching different result to generate a despreading result. For this example, the code matching differential result includes an early code matching differential result, a punctual code matching differential result, and a late code matching differential result. Therefore, the output of the mixer 211C may be an early despreading result, a punctual despreading result, and a late despreading result. Integrate + dump 209 may then perform coherent integration by accumulating each of the three despreading results to generate three correlation peaks (e.g., early correlation peak, punctual correlation peak, and a late correlation peak). Let it be assumed that one correlation peak shows sufficient alignment.

This would confirm that the PCA differential result, for the test Doppler remainder of 0.25 KHz, sufficiently aligned with the code matching differential result. This would mean that the PCA output for the test Doppler remainder of 0.25 KHz, from pre-correlation stacking unit 300, resulted in a PCA differential result that is phase coherent with a local signal code. Therefore, the phase coherence was the result of using the different phase rotation values, which are the different multiples of 0.25, that were used to generate the PCA output for the test Doppler remainder of 0.25 KHz. Accordingly, a correlation peak, corresponding to the PCA differential result for the test Doppler remainder of 0.25 KHz, can be used for signal detection (e.g., to detect a legitimate signal that is distinguishable from noise).

According to the one or more embodiments as described herein, the mixer 211C could sequentially receive, and perform coherent integration for, each of the other PCA differential results that correspond to the other Doppler remainders being tested (e.g., 0 KHz, 0.125 KHz, 0.375 KHz, 0.5 KHz, 0.625 KHz, 0.75 KHz, and 0.875 KHz).

However, and in this example, the other PCA differential results for the other test Doppler remainders would not result in correlation peaks that show sufficient alignment. Therefore, these other correlation peaks would not result in the detection of a legitimate signal and the other correlation peaks may be ignored for signal acquisition and tracking. In an embodiment, the PCA differential results for each test Doppler remainder may be sequentially processed until a correlation peak meets the predefined threshold. When the correlation peak that meets the predefined threshold is identified, the other PCA differential results over the buffer duration may be ignored.

Accordingly, the one or more embodiments as described herein can utilize the PCA outputs that are generated for the plurality of different test Doppler remainders to obtain phase coherent samples for coherent integration with an unknown Doppler shift. That is, and by generating a PCA output for each of the plurality of different test Doppler remainders of an unknown Doppler shift, the one or more embodiments as described herein can ensure that one of the PCA differential results will be phase coherent for coherent integration (e.g., the other PCA differential results will not be phase coherent). By ensuring phase coherence for coherent integration, the one or more embodiments as described herein provide an improvement in the technological field of signal processing. That is, the one or more embodiments as described herein provide an improvement in the existing technological field of signal processing for signal detection.

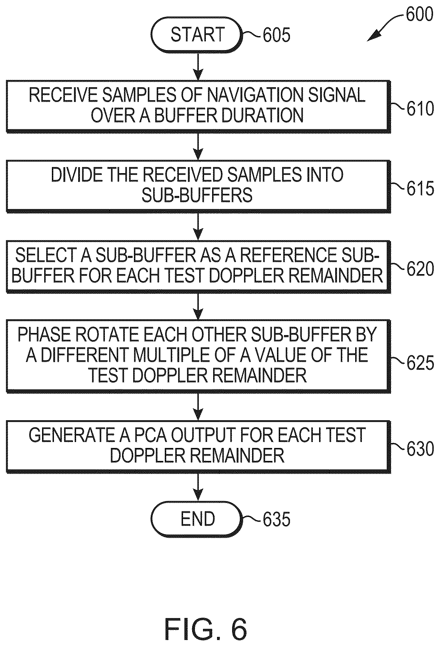

Fig. 6 is a flow diagram of a sequence of steps for generating pre-correlation accumulation (PCA) outputs according to the one or more embodiments as described herein. The procedure 600 starts at step 605 and continues to step 610. At step 610, the pre-correlation stacking unit 300 receives a plurality of samples of a signal over a buffer duration. For the example of Fig. 6, let it be assumed that the buffer duration is 5 ms and 10,240 samples are received by pre-correlation stacking unit 300 over the 5 ms buffer duration.

The procedure continues from step 610 to step 615. At step 615, the pre-correlation stacking unit 300 equally divides the received samples into sub-buffers (i.e., portions). For this example, the pre-correlation stacking unit 300 may divide the 10,240 samples into five 1 ms sub-buffers, where each 1 ms sub-buffer includes 2,048 samples. In an embodiment, the pre-correlation stacking unit 300 may equally divide the received samples after receiving the samples over the buffer duration. In an alternative embodiment, the pre-correlation stacking unit 300 may equally divide the received samples while the samples are received over the buffer duration. For the latter embodiment, the pre-correlation stacking unit 300 may receive the first 2,048 samples over 1 ms and create the first sub-buffer, then receive the second 2,048 samples over the 2nd ms and create the second sub-buffer, and so forth.

The procedure continues from step 615 to step 620. At step 620, the pre-correlation stacking unit 300 selects a sub-buffer as a reference sub-buffer for each test Doppler remainder. In an embodiment, the sub-buffer selected for the reference sub-buffer may be the middle sub-buffer of all sub-buffers. For this example, the test Doppler remainders are 0 KHz, 0.125 KHz, 0.25 KHz, 0.375 KHz, 0.5 KHz, 0.625 KHz, 0.75 KHz and 0.875 KHz. Therefore, and according to the one or more embodiments as described herein, the pre-correlation stacking unit 300 would select one of sub-buffers 0 through 4 as a reference sub-buffer for each of the test Doppler remainders of 0 KHz, 0.125 KHz, 0.25 KHz, 0.375 KHz, 0.5 KHz, 0.625 KHz, 0.75 KHz and 0.875 KHz.

In an embodiment, a reference sub-buffer is a sub-buffer that is not phase rotated. For example, the pre-correlation stacking unit 300 may select the middle sub-buffer 2, of sub-buffers 0 through 4, as the reference sub-buffer.

The procedure continues from step 620 to step 625. At step 625, the pre-correlation stacking unit 300 phase rotates each other sub-buffer (other than the reference sub-buffer) by a different multiple of a value of the test Doppler remainder. Continuing with the example for the test Doppler remainder of 0.25 KHz, the pre-correlation stacking unit 300 phase rotates the samples of each of sub-buffers 0, 1, 3, and 4 by a different multiple of 0.25. For example, the pre-correlation stacking unit 300 may (1) phase rotate the samples of sub-buffer 0 by 0.5 cycles, (2) phase rotate the samples of sub-buffer 1 by 0.25 cycles, (3) phase rotate the samples of sub-buffer 3 by -0.25 cycles, and (4) phase rotate the samples of sub-buffer 4 by -0.5 cycles. The pre-correlation stacking unit 300 would similarly rotate the samples of all but the reference sub-buffer for the other test Doppler remainders of 0 KHz, 0.125 KHz, 0.375 Hz, 0.5 KHz, 0.625 KHz, 0.75 KHz and 0.875 KHz. The number of test Doppler remainders is scaled up accordingly (4*L) based on the PCA accumulation length to cover different phase rotations for different test Doppler remainders:

$$L=(N-1)/2,$$

where L is the largest offset between the sub-buffers and the reference sub-buffer and N is the buffer duration in terms of the number of the code (sub-buffers) to be stacked (e.g., milliseconds).

For the example, the reference sub-buffer is sub-buffer 2. The other sub-buffers are sub-buffers 0, 1, 3, and 4. The offset between sub-buffer 2 and sub-buffer 1 is 1 (e.g., 2-1=1). Similarly, the offset between sub-buffer 2 and sub-buffer 3 is 1 (e.g., 3-2=1). The offset between sub-buffer 2 and sub-buffer 0 is 2 (e.g., 2-0=2). Similarly, the offset between sub-buffer 2 and sub-buffer 4 is 2 (e.g., 4-2=2). Therefore, the largest offset among all the offsets is 2. As such, L=2. Accordingly, the number of Doppler remainders to be tested for this example is 8 (e.g., 4*L and L=2). Alternatively, the number of Doppler remainders to be tested may be calculated as 4*floor(N/2). In this example, N is 5. Therefore, the number of Doppler remainders to be tested is 8 (e.g., 4*floor(5/2)).

In an embodiment, the phase rotation between any two consecutive sub-buffers is determined by the value of the test Doppler remainder. Continuing with the example for the test Doppler remainder of 0.25 KHz, the phase rotation between any two consecutive sub-buffers is 0.25 cycles.

The procedure continues from step 625 to step 630. At step 630, a pre-correlation accumulation (PCA) output is generated for each test Doppler remainder. In an embodiment, the adder 310 of pre-correlation stacking unit 300 generates the PCA output for each test Doppler remainder. Continuing with the example for the test Doppler remainder of 0.25 KHz, adder 310 may accumulate/add the stacked samples to generate an accumulation result, e.g., PCA output. Therefore, and in this example, adder 310 of Fig. 3 generates a PCA output for each of test Doppler remainders of 0 KHz, 0.125 KHz, 0.25 KHz, 0.375 KHz, 0.5 KHz, 0.625 KHz, 0.75 KHz and 0.875 KHz. The procedure then ends at step 635.

Fig. 7 is a flow diagram of a sequence of steps for using pre-correlation accumulation (PCA) outputs for signal detection according to the one or more embodiments as described herein. The procedure 700 starts at step 705 and continues to step 710. At step 710, a differential operation is executed on a PCA output for a test Doppler remainder. In an embodiment, the differential operation is a delay operation and a multiply operation. For this example, let it be assumed that the PCA output is for the test Doppler remainder of 0.25KHz. As such, the PCA output may be provided to delay operation 204A and conjugate multiply operation 205A of Fig. 4. Based on the execution of delay operation 204A and conjugate multiple operation 205A, a delayed version of the PCA output may be generated.

The procedure continues from step 710 to step 715. At step 715, a PCA differential result is generated. For example, mixer 211B of Fig. 4 may mix the PCA output for the test Doppler remainder of 0.25 KHz, received from adder 310 of pre-correlation stacking unit 300, with its delayed version received from conjugate multiply operation 205A. In an embodiment, mixer 211B may mitigate the Doppler effect by mixing the PCA output with its delayed version to generate a PCA differential result. The PCA differential result may be provided from mixer 211B to mixer 211C for coherent integration.

For this example, the PCA differential result for the test Doppler remainder of 0.25 KHz is provided from mixer 211B to mixer 211C for coherent integration.

The procedure continues from step 715 to step 720. At step 720, signal despreading is executed by mixing the PCA differential result, for the test Doppler remainder, with one or more code matching differential results. For example, and in relation to Fig. 4, the NCO 203 may generate one or more local code signals. Each local code signal may be used with delay 204B, conjugate multiply 205B, and mixer 211D, as described herein, to generate a corresponding code matching differential result. The one or more local code signals may include one or more of an early version of the local code, a punctual version of the local code, and a late version of the local code.

Based on which local code signals are received, the mixer 211D may generate an early code matching differential result, a punctual code matching differential result, and/or a late code matching differential result. The mixer 211C may mix (i.e., correlate) the PCA differential result with each code matching differential result to generate an early despreading result, a punctual despreading result, and/or a late despreading result.

The procedure continues from step 720 to step 725. At step 725, coherent integration is executed. In an embodiment, the integrate + dump 209 may receive the despreading result from mixer 211C as depicted in Fig. 4. Continuing with the example, integrate + dump 209 may execute coherent integration by accumulating each despreading result corresponding to the PCA differential result for the test Doppler remainder of 0.25 KHz. In an embodiment, the integrate + dump 209 performs an accumulation for all the samples of each despreading result to generate one or more correlation peaks. For example, the integrate + dump 209 may generate (1) an early correlation peak when the early despreading result is received, (2) a punctual correlation peak when the punctual despreading result is received, and/or (3) a late correlation peak when the late despreading result is received.

In an embodiment, the PCA differential result and the code matching differential result may be transformed from the time domain to the frequency domain using a FFT operation. The mixer 211C may mix the PCA differential result and the code matching differential result in the frequency domain. The mixing may result in the generation of a despreading result. The despreading result may then be transformed back to the time domain using an IFFT operation. In an embodiment, the FFT operation and IFFT operation may use a half bin approach to more efficiently perform the correlation.

The procedure continues from step 725 to step 730. At step 730, it is determined whether a correlation peak (i.e., correlation output), for the test Doppler remainder, meets a threshold. For example, threshold checker 222 of Fig. 4 may compare one or more correlation peaks (e.g., early, punctual, and/or late correlation peaks) with the predefined threshold value. If a correlation peak meets a predefined threshold (e.g., noise threshold), it may indicate sufficient alignment between the PCA differential result and the code matching differential result. If there is not sufficient alignment, the procedure continues from step 730 to step 735. At step 735 the correlation peak may be ignored, e.g., not utilized for signal acquisition and/or tracking. Therefore, and if necessary, the procedure continues from step 735 to step 710 such that the process is repeated for the PCA output for a next Doppler remainder being tested over the buffer duration.

If there is sufficient alignment, the procedure continues from step 730 to step 740. At step 740, it is determined that a signal is detected. Stated another way, the correlation peak meeting the predefined threshold indicates the presence of a legitimate signal, which is distinguishable from noise. If a signal is detected/present, the procedure optionally continues from step 740 to step 745. At optional step 745, a correlation peak is utilized for signal acquisition and tracking. The procedure then ends at step 750.

Therefore, each of the PCA outputs for the test Doppler remainders (e.g., 0 KHz, 0.125 KHz, 0.25 KHz, 0.375 KHz, 0.5 KHz, 0.625 KHz, 0.75 KHz, 0.875 KHz) can be sequentially processed to determine which corresponding PCA differential result produces a correlation peak with sufficient alignment for signal detection. After the correlation peak has been identified for signal detection, the procedure 700 of Fig. 7 can be repeated for the next buffer duration using the same or different test Doppler remainders. For example, the PCA outputs for each of the test Doppler remainders of 0 KHz, 0.125 KHz, 0.25 KHz, 0.375 KHz, 0.5 KHz, 0.625 KHz, 0.75 KHz and 0.875 KHz can be generated for the next 5 ms buffer duration and processed according to the procedure 700 of Fig. 7 as described above.

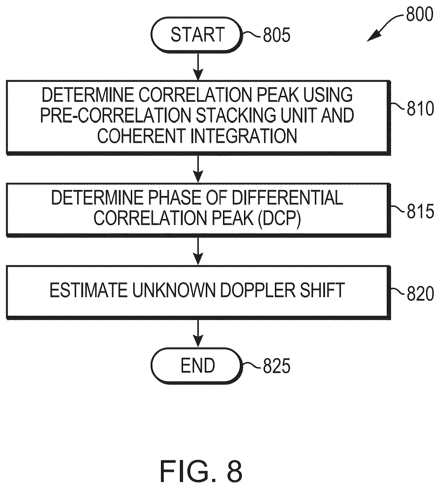

Fig. 8 is a flow diagram of a sequence of steps for estimating an unknown Doppler shift using a correlation peak determined from the signal detection of Fig. 7 and according to the one or more embodiments as described herein. Procedure 800 starts at step 805 and continues to step 810. At step 810, a correlation peak is determined using the pre-correlation stacking unit 300 and coherent integration (e.g., integrate + dump 209). For example, the correlation peak may be determined as described above in relation to Fig. 7.

The procedure continues from step 810 to step 815. At step 815, the tracking module 206 determines a phase of a differential correlation peak (DCP) that is based on the correlation peak determined in step 810. In an embodiment, the DCP may be represented based on the following:

$$DCP = I + Q,$$

where I is the in-phase component of the correlation peak determined based on the coherent integration as described herein and Q is the quadrature component of the correlation peak determined based on the coherent integration as described herein.

In an embodiment, the tracking module 206 determines the phase (in cycles) of the DCP based on the following:

$$\text{phase (in cycles)} = \tan^{-1}(Q,I),$$

wherein $\tan^{-1}$ is the inverse tangent operation.

The procedure continues from step 815 to step 820. At step 820, the tracking module 206 estimates the unknown Doppler shift. In an embodiment, the tracking module 206 estimates the unknown Doppler shift using the phase (in cycles) of the DCP, a sample rate, and a differential delay in samples. For example, the tracking module 206 can estimate the unknown Doppler shift based on the following:

unknown Doppler shift (in Hz) = phase (in cycles)*sample rate (in Hz)/differential delay (in samples).

By estimating the unknown Doppler shift according to the one or more embodiments as described herein, signal acquisition and tracking is more efficient when compared to conventional approaches that may, for example, have to iteratively search for the correct Doppler shift in a large frequency range (e.g., +/- 120 KHz).

The procedure 800 then ends at step 825.

It should be understood that a wide variety of adaptations and modifications may be made to the techniques. For example, the steps of the flow diagram as described herein may be performed sequentially, in parallel, or in one or more varied orders. In general, functionality may be implemented in software, hardware or various combinations thereof. Software implementations may include electronic device-executable instructions (e.g., computer-executable instructions) stored in a non-transitory electronic device-readable medium (e.g., a non-transitory computer-readable medium), such as a volatile memory, a persistent storage device, or other tangible medium. Hardware implementations may include logic circuits, application specific integrated circuits, and/or other types of hardware components. Further, combined software/hardware implementations may include both electronic device-executable instructions stored in a non-transitory electronic device-readable medium, as well as one or more hardware components. Above all, it should be understood that the above description is meant to be taken only by way of example.

The subject-matter according to the description above may also be considered to comprise the following aspects 1 to 20:

Aspect 1. A system for generating pre-correlation phase coherent samples for signal detection, the system comprising:

a memory;
a processor coupled to the memory;
a pre-correlation stacking unit executed by the processor and configured to:

create a plurality of sub-buffers, each sub-buffer including an equal number of samples of navigation data; and
test a plurality of different Doppler remainders, wherein the pre-correlation stacking unit, to test each Doppler remainder of the plurality of different Doppler remainders, is further configured to:

select, for a Doppler remainder being tested, a sub-buffer of the plurality of sub-buffers as a reference sub-buffer;
phase rotate each other sub-buffer, of the plurality of sub-buffers, by a different multiple of a value of the Doppler remainder being tested,
wherein the phase rotation between any two consecutive sub-buffers, of the plurality of sub-buffers, is equal to the value of the Doppler remainder being tested; and

accumulate the plurality of sub-buffers, that include the reference sub-buffer and each of the other sub-buffers that is phase rotated, to generate a pre-correlation accumulation (PCA) output for the Doppler remainder being tested, wherein the PCA for output is generated each of the plurality of different Doppler remainders being tested.

Aspect 2. The system of aspect 1, wherein the processor is further configured to:

receive a particular PCA output for a particular Doppler remainder being tested; and

execute a differential operation on the particular PCA output to generate a delayed PCA output.

Aspect 3. The system of one or more previous aspects, wherein the differential operation includes a delay operation and a conjugate multiply operation.

Aspect 4. The system of one or more previous aspects, further comprising:

a first mixer executed by the processor and configured to mix the particular PCA output with the delayed PCA output to generate a particular PCA differential result.

Aspect 5. The system of one or more previous aspects, further comprising:

a second mixer configured to execute signal despreading by mixing the particular PCA differential result with a code matching differential result to generate a despreading result. Aspect 6. The system of one or more previous aspects, wherein the processor is further configured to:

perform coherent integration by accumulating the despreading result to generate a correlation output; and determine that a signal is present when the correlation output meets a predefined threshold.

Aspect 7. The system of one or more previous aspects, wherein the plurality of different Doppler remainders correspond to phase shifts that include a phase shift of 0 radians and one or more other phase shifts between 0 radians and $2\pi$ radians.

Aspect 8. The system of one or more previous aspects, wherein a number of the plurality of different Doppler remainders to be tested is:

$$4*\mathrm{floor}(N/2),$$

where

N is a buffer duration that is based on a number of the plurality of sub-buffers and floor is a floor operation.

Aspect 9. A method for generating pre-correlation phase coherent samples for signal detection, the method comprising:

creating, by processor coupled to a memory of a computing device, a plurality of sub-buffers, each sub-buffer including an equal number of samples of navigation data; and

testing, by the processor, each of a plurality of different Doppler remainders by:

selecting, for a Doppler remainder being tested, a sub-buffer of the plurality of sub-buffers as a reference sub-buffer;

phase rotating each other sub-buffer, of the plurality of sub-buffers, a different multiple of a value of the Doppler remainder being tested,

wherein the phase rotation between any two consecutive sub-buffers, of the plurality of sub-buffers, is equal to the value of the Doppler remainder being tested; and

accumulating the plurality of sub-buffers, that include the reference sub-buffer and each of the other sub-buffers that is phase rotated, to generate a pre-correlation accumulation (PCA) output for the Doppler remainder being tested, wherein the PCA

output is generated for each of the plurality of different Doppler remainders being tested.

Aspect 10. The method of aspect 9, further comprising:

receiving a particular PCA output for a particular Doppler remainder being tested; and executing a differential operation on the particular PCA output to generate a delayed PCA output.

Aspect 11. The method of one or more of aspects 9 to 10, wherein the differential operation includes a delay operation and a conjugate multiply operation.

Aspect 12. The method of one or more of aspects 9 to 11, further comprising:

mixing, by the processor, the particular PCA output with the delayed PCA output to generate a particular PCA differential result.

Aspect 13. The method of one or more of aspects 9 to 12, further comprising:

executing signal despreading by mixing the PCA differential result with a code matching differential result to generate a despreading result; and

executing coherent integration by accumulating the despreading result to generate a correlation output.

Aspect 14. The method of one or more of aspects 9 to 13, further comprising:
determining that a signal is present when the correlation output meets a predefined threshold.

Aspect 15. The method of one or more of aspects 9 to 14, wherein the plurality of different Doppler remainders correspond to phase shifts that include a phase shift of 0 radians and one or more other phase shifts between 0 radians and $2\pi$ radians.

Aspect 16. The method of one or more of aspects 9 to 15, wherein a number of the plurality of different Doppler remainder to be tested is:

$$4*\text{floor}(N/2),$$

where
N is a buffer duration that is based on a number of the plurality of sub-buffers and floor is a floor operation.

Aspect 17. A non-transitory computer readable medium having software encoded thereon, the software when executed by one or more computing devices operable to:

generate, prior to coherent integration, a pre-correlation accumulation (PCA) output for each of a plurality of different test Doppler remainders corresponding to an unknown Doppler shift;
determine that a particular PCA output, which is used with the coherent integration, is associated with a correlation peak that meets a predefined threshold;
determine a phase of a differential correlation peak that is determined based on the correlation peak; and
estimate the unknown Doppler shift using the phase of the differential correlation peak, a sample rate, and a differential delay in samples.

Aspect 18. The non-transitory computer readable medium of aspects 17, wherein the differential correlation peak (DCP) is represented as:

$$\text{DCP} = \text{I} + \text{Q},$$

where I is the in-phase component of the correlation peak and Q is the quadrature component of the correlation peak.

Aspect 19. The non-transitory computer readable medium of aspects 17 to 18, wherein the phase is in cycles and the phase of the DCP is determined based on:

$$\text{Phase} = \tan^{-1}(\text{Q,I}),$$

wherein $\tan^{-1}$ is the inverse tangent operation.

Aspect 20. The non-transitory computer readable medium of aspects 17 to 19, wherein
the unknown Doppler shift is in hertz and the unknown Doppler shift is determined based on:

Unknown Doppler shift = the phase of the differential correlation peak * the sample rate/the differential delay in samples.

**Claims**

1. A system for generating pre-correlation phase coherent samples for signal detection, the system comprising:

a memory;
a processor coupled to the memory;
a pre-correlation stacking unit (300) executed by the processor and configured to:

create a plurality of sub-buffers, each sub-buffer including an equal number of samples of signal data; and
test a plurality of different Doppler remainders, wherein the pre-correlation stacking unit (300), to test each Doppler remainder of the plurality of different Doppler remainders, is further configured to:

select, for a Doppler remainder being tested, a sub-buffer of the plurality of sub-buffers as a reference sub-buffer;

phase rotate each other sub-buffer, of the plurality of sub-buffers, by a different multiple of a value of the Doppler remainder being tested,

wherein the phase rotation between any two consecutive sub-buffers, of the plurality of sub-buffers, is equal to the value of the Doppler remainder being tested; and

accumulate the plurality of sub-buffers, that include the reference sub-buffer and each of the other sub-buffers that is phase rotated, to generate a pre-correlation accumulation (PCA) output for the Doppler remainder being tested, wherein the PCA for output is generated each of the plurality of different Doppler remainders being tested.

2. The system of claim 1, wherein the processor is further configured to:

receive a particular PCA output for a particular Doppler remainder being tested; and
execute a differential operation on the particular PCA output to generate a delayed PCA output.

3. The system of claim 2, wherein the differential operation includes a delay operation (204A, 204B) and a conjugate multiply operation (205A, 205B).

4. The system of claim 2, further comprising:
a first mixer (211A, 311A) executed by the processor and configured to mix the particular PCA output with the delayed PCA output to generate a particular PCA differential result.

5. The system of claim 4, further comprising:
a second mixer (211B, 311B) configured to execute signal despreading by mixing the particular PCA differential result with a code matching differential result to generate a despreading result,
in particular wherein the processor is further configured to:

perform coherent integration by accumulating the despreading result to generate a correlation output; and
determine that a signal is present when the correlation output meets a predefined threshold.

6. The system of claim 1, wherein

the plurality of different Doppler remainders correspond to phase shifts that include a phase shift of 0 radians and one or more other phase shifts between 0 radians and $2\pi$ radians, or
a number of the plurality of different Doppler remainders to be tested is:

$$4*\text{floor}(N/2),$$

where N is a buffer duration that is based on a number of the plurality of sub-buffers and floor is a floor operation.

7. A method for generating pre-correlation phase coherent samples for signal detection, the method comprising:

creating, by processor coupled to a memory of a computing device, a plurality of sub-buffers, each sub-buffer including an equal number of samples of signal data; and
testing, by the processor, each of a plurality of different Doppler remainders by:

selecting, for a Doppler remainder being tested, a sub-buffer of the plurality of sub-buffers as a reference sub-buffer;
phase rotating each other sub-buffer, of the plurality of sub-buffers, a different multiple of a value of the Doppler remainder being tested,
wherein the phase rotation between any two consecutive sub-buffers, of the plurality of sub-buffers, is equal to the value of the Doppler remainder being tested; and
accumulating the plurality of sub-buffers, that include the reference sub-buffer and each of the other sub-buffers that is phase rotated, to generate a pre-correlation accumulation (PCA) output for the Doppler remainder being tested, wherein the PCA output is generated for each of the plurality of different Doppler remainders being tested.

8. The method of claim 7, further comprising:

receiving a particular PCA output for a particular Doppler remainder being tested; and
executing a differential operation on the particular PCA output to generate a delayed PCA output.

9. The method of claim 8, wherein the differential operation includes a delay operation and a conjugate multiply operation.

10. The method of claim 8, further comprising:
mixing, by the processor, the particular PCA output with the delayed PCA output to generate a particular PCA differential result.

11. The method of claim 10, further comprising:

executing signal despreading by mixing the PCA differential result with a code matching differential result to generate a despreading result; and
executing coherent integration by accumulating the despreading result to generate a correlation output,

in particular wherein the method further comprises:
determining that a signal is present when the correlation output meets a predefined threshold.

12. The method of claim 1, wherein

the plurality of different Doppler remainders correspond to phase shifts that include a phase shift of 0 radians and one or more other phase shifts between 0 radians and $2\pi$ radians, or
a number of the plurality of different Doppler remainder to be tested is:

$$4*\mathrm{floor}(N/2),$$

where N is a buffer duration that is based on a number of the plurality of sub-buffers and floor is a floor operation.

13. A non-transitory computer readable medium having software encoded thereon, the software when executed by one or more computing devices operable to:

generate, prior to coherent integration, a pre-correlation accumulation (PCA) output for each of a plurality of different test Doppler remainders corresponding to an unknown Doppler shift;
determine that a particular PCA output, which is used for the coherent integration, is associated with a correlation peak that meets a predefined threshold;
determine a phase of a differential correlation peak that is based on the correlation peak; and
estimate the unknown Doppler shift using the phase of the differential correlation peak, a sample rate, and a differential delay in samples.

14. The non-transitory computer readable medium of claim 13, wherein the differential correlation peak (DCP) is represented as:

$$\mathrm{DCP} = \mathrm{I} + \mathrm{Q},$$

where I is the in-phase component of the correlation peak and Q is the
quadrature component of the correlation peak,
in particular wherein the phase is in cycles and the phase of the DCP is determined based on:

$$\mathrm{phase} = \tan^{-1}(Q,I),$$

wherein $\tan^{-1}$ is the inverse tangent operation.

15. The non-transitory computer readable medium of claim 13, wherein the unknown Doppler shift is in hertz and the unknown Doppler shift is determined based on:

unknown Doppler shift = the phase of the differential correlation peak * the sample rate/the differential delay in samples.

IF SAMPLES (I & Q)

CARRIER NCO (I & Q)

CODE NCO (E/P/L)

INTEGRATE + DUMP T = 1 ms

T

CONJ(·)

SUMMATION Σ

DELAY AND CONJUGATE MULTIPLY

CARRIER PHASE DISCRIMINATOR

CODE PHASE DISCRIMINATOR

TRACKING LOOP FILTERS

DATA BIT RECOVERY

NAVIGATION PROCESSING

CODE PHASE CONTROL

CARRIER PHASE CONTROL

POST-DD INTEGRATION TECHNIQUE

FIG. 1
(PRIOR ART)

PRE-DD INTEGRATION TECHNIQUE

# FIG. 2
## (PRIOR ART)

EP 4 764 612 A1

100

TRANSMITTER
108

106

BODY OF INTEREST          102

RECEIVER          104

ENHANCED
PRE-DD SIGNAL
PROCESSING
UNIT
114

FIG. 3

FIG. 4

EP 4 764 612 A1

EP 4 764 612 A1

PRE-CORRELATION STACKING UNIT

FIG. 5

FIG. 6

FIG. 7

```
                    ┌─────────────┐
                    │    START    │──805              ┌─800
                    └─────────────┘
                           │
                           ▼
      ┌───────────────────────────────────────────┐
      │   DETERMINE CORRELATION PEAK USING          │
      │   PRE-CORRELATION STACKING UNIT AND         │──810
      │         COHERENT INTEGRATION                │
      └───────────────────────────────────────────┘
                           │
                           ▼
      ┌───────────────────────────────────────────┐
      │   DETERMINE PHASE OF DIFFERENTIAL           │
      │      CORRELATION PEAK (DCP)                 │──815
      └───────────────────────────────────────────┘
                           │
                           ▼
      ┌───────────────────────────────────────────┐
      │     ESTIMATE UNKNOWN DOPPLER SHIFT          │──820
      └───────────────────────────────────────────┘
                           │
                           ▼
                    ┌─────────────┐
                    │     END     │──825
                    └─────────────┘
```

# FIG. 8

## EUROPEAN SEARCH REPORT

**Application Number**

**EP 25 20 6680**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SVATON JIRI ET AL: "Pre- and post-correlation method for acquisition of new GNSS signals with secondary code", 2018 IEEE/ION POSITION, LOCATION AND NAVIGATION SYMPOSIUM (PLANS), IEEE, 23 April 2018 (2018-04-23), pages 1422-1427, XP033354098, DOI: 10.1109/PLANS.2018.8373535 [retrieved on 2018-06-05] * page 1424; figure 4 * | 1-15 | INV. G01S19/24 G01S19/29 G01S19/30 ADD. H04B1/06 H04B1/69 |
| A | US 2010/074308 A1 (YOUNG PHILIP JOHN [GB]) 25 March 2010 (2010-03-25) * paragraph [0040] - paragraph [0054]; figure 2 * | 1-15 | |
| A | LIU JUNLIANG ET AL: "Pre-correlation and post-correlation differential acquisition techniques for BDS B1I signal", PROCEEDINGS 2013 INTERNATIONAL CONFERENCE ON MECHATRONIC SCIENCES, ELECTRIC ENGINEERING AND COMPUTER (MEC), IEEE, 20 December 2013 (2013-12-20), pages 2861-2864, XP032634283, DOI: 10.1109/MEC.2013.6885519 ISBN: 978-1-4799-2564-3 [retrieved on 2014-08-27] * the whole document * * figure 1 * | 1-15 | TECHNICAL FIELDS SEARCHED (IPC) G01S H04B |

The present search report has been drawn up for all claims

| Place of search | Date of completion of the search | Examiner |
|---|---|---|
| Munich | 20 February 2026 | Ribbe, Jonas |

EPO FORM 1503 03.82 (P04C01)

**EP 4 764 612 A1**

## ANNEX TO THE EUROPEAN SEARCH REPORT
## ON EUROPEAN PATENT APPLICATION NO.

EP 25 20 6680

20-02-2026

| Patent document cited in search report | Publication date | Patent family member(s) | | Publication date |
|---|---|---|---|---|
| US 2010074308 A1 | 25-03-2010 | AT | E514098 T1 | 15-07-2011 |
| | | CN | 101802634 A | 11-08-2010 |
| | | EP | 2223143 A2 | 01-09-2010 |
| | | JP | 6246966 B2 | 13-12-2017 |
| | | JP | 2010526997 A | 05-08-2010 |
| | | JP | 2016006429 A | 14-01-2016 |
| | | JP | 2017173332 A | 28-09-2017 |
| | | KR | 20100012871 A | 08-02-2010 |
| | | US | 2010074308 A1 | 25-03-2010 |
| | | WO | 2008138891 A2 | 20-11-2008 |